(19) Europäisches Patentamt
European Patent Office
Office européen des brevets

(11) **EP 4 574 724 A1**

(12) **EUROPEAN PATENT APPLICATION**

(43) Date of publication:
**25.06.2025 Bulletin 2025/26**

(21) Application number: **24214448.3**

(22) Date of filing: **21.11.2024**

(51) International Patent Classification (IPC):
**B65H 20/34** (2006.01)   **B65H 23/04** (2006.01)
**B65H 23/188** (2006.01)   **B65H 45/103** (2006.01)
**B65H 45/20** (2006.01)   **H01M 10/04** (2006.01)

(52) Cooperative Patent Classification (CPC):
**B65H 20/34; B65H 23/048; B65H 23/1882;
B65H 45/103; B65H 45/20; H01M 10/0404;
H01M 10/0431; H01M 10/045; H01M 10/0459;
H01M 10/0583; B65H 2301/11; B65H 2301/45;
B65H 2511/112; B65H 2801/72**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023   KR 20230187130**

(71) Applicant: **SAMSUNG SDI CO., LTD.
Yongin-si, Gyeonggi-do 17084 (KR)**

(72) Inventors:
• **Kim, Chan Hoon
  16678 Suwon-si, Gyeonggi-do (KR)**
• **Kim, Hyo Jeong
  16678 Suwon-si, Gyeonggi-do (KR)**

(74) Representative: **Gulde & Partner
Patent- und Rechtsanwaltskanzlei mbB
Berliner Freiheit 2
10785 Berlin (DE)**

(54) **APPARATUS FOR MANUFACTURING ELECTRODE ASSEMBLY AND METHOD OF CONTROLLING THE SAME**

(57)    An apparatus for manufacturing an electrode assembly formed in a stack structure of an electrode plate and a separator includes a separator supply unit configured to supply the separator, a folding unit that moves with respect to a stack table to fold the separator on the stack table, a guide unit provided on a movement path of the separator from the separator supply unit to the folding unit to guide movement of the separator, a compensator unit that is movable to compensate for a change in length of the movement path of the separator, and a controller unit configured to control movement of the compensator unit based on structural parameters for a structure of the apparatus and motion parameters for a motion of the folding unit to compensate for the change in length of the movement path of the separator.

FIG. 1

# EP 4 574 724 A1

**Description**

BACKGROUND

1. Field

Embodiments relate to an apparatus for manufacturing an electrode assembly and a method of controlling the same.

2. Description of the Related Art

Unlike a primary battery that cannot be recharged, a secondary battery is a battery that can be charged and discharged. Low-capacity secondary batteries are used in small portable electronic devices such as smartphones, feature phones, laptop computers, digital cameras, and camcorders, and high-capacity secondary batteries are widely used as driving power sources and power storage batteries for motors in hybrid vehicles, electric vehicles, and the like. Such a secondary battery includes an electrode assembly, a case for accommodating the same, and an electrode terminal connected to the electrode assembly.

The above information disclosed in this Background section is only for enhancement of understanding of the background of the present disclosure.

SUMMARY

Embodiments include an apparatus for manufacturing an electrode assembly formed in a stack structure of an electrode plate and a separator, the apparatus including a separator supply unit configured to supply the separator, a stack table, a folding unit that moves with (is configured to move with) respect to the stack table to fold the separator on the stack table, a guide unit (200) unit provided on a movement path of the separator from the separator supply unit to the folding unit (configured) to guide movement of the separator, a compensation unit that is movable and is configured to compensate for a change in length of the movement path of the separator; and a control unit configured to control movement of the compensation unit based on structural parameters for a structure of the apparatus and motion parameters for a motion of the folding unit to compensate for the change in length of the movement path of the separator.

The guide unit may include an end guide member positioned and fixed at a front end of the folding unit with respect to the movement path of the separator to guide movement of the separator toward the folding unit.

If a length of the separator on the movement path of the separator connected to the end guide member, the folding unit, and the stack table is defined as a control length, the change in length of the movement path of the separator is a change in the control length according to movement of the folding unit.

The folding unit may reciprocate (may be configured to reciprocate) between a first point and a second point to fold the separator, and if a two-dimensional coordinate system is introduced to include a first axis passing through the first point and the second point and a second axis extending from the stack table in a direction perpendicular to the first axis, the control unit controls (is configured to control) the movement of the compensation unit to compensate for the change in control length in the two-dimensional coordinate system.

The compensation unit may be provided on the movement path of the separator (configured) to move in a direction of the first axis and compensate for the change in control length.

If the control length is changed into a smaller value than a predefined reference value, the control unit compensates (is configured to compensate) for a negative change in the control length by controlling the movement of the compensation unit to increase a tension of a portion of the separator corresponding to the control length, wherein the predefined reference value is the control length if a target tension is formed in the separator.

If the control length is changed into a larger value than a predefined reference value, the control unit compensates (is configured to compensate) for a positive change in the control length by controlling the movement of the compensation unit to decrease a tension of a portion of the separator corresponding to the control length, wherein the predefined reference value is the control length if a target tension is formed in the separator.

The control unit may control (may be configured to control) the movement of the compensation unit in real time according to the change in control length to actively compensate for the change in control length.

The structural parameters may include (i) a first distance between the first point and the second point, (ii) a second distance between an edge of the separator and the folding unit formed with respect to a width direction of the separator in a state in which the folding unit is positioned at the first point or the second point, (iii) a third distance from the stack table to the end guide member, (iv) a fourth distance from the stack table to a lower end of the folding unit, and (v) a radius of the folding unit implemented as a roller type, and wherein the motion parameters may include a first axis direction movement distance of the folding unit.

The control length may include (i) a first straight length of the separator extending from the end guide member to a first contact point between the separator and the folding unit, (ii) a first arc length of the separator extending from the first contact point to an intersection between the folding unit and the first axis, iii) a second arc length of the separator extending from the intersection to a second contact point between the separator and the folding unit, and (iv) a second straight length of the separator extending from the second contact point to the stack table.

The control unit may calculate (may be configured to calculate) the first straight length and the first arc length using the first distance, the third distance, the fourth distance, the radius of the folding unit, and the first axis direction movement distance of the folding unit.

The control unit may calculate (may be configured to calculate) the second straight length and the second arc length using the second distance, the fourth distance, the radius of the folding unit, and the first axis direction movement distance of the folding unit.

Embodiments include a method of controlling an apparatus for manufacturing an electrode assembly formed in a stack structure of an electrode plate and a separator, the method including obtaining, by a control unit, structural parameters for a structure of the apparatus and motion parameters for a motion of a folding unit, and controlling, by the control unit, movement of a compensation unit based on the obtained structural parameters and motion parameters to compensate for a change in length of a movement path of the separator, wherein the apparatus includes a separator supply unit configured to supply the separator, the folding unit that moves with respect to a stack table to fold the separator on the stack table, and a guide unit provided on the movement path of the separator from the separator supply unit to the folding unit to guide movement of the separator.

The guide unit may include an end guide member positioned and fixed at a front end of the folding unit with respect to the movement path of the separator to guide the movement of the separator toward the folding unit, and if a length of the separator on the movement path of the separator connected to the end guide member, the folding unit, and the stack table is defined as a control length, a change in length of the movement path of the separator is a change in the control length according to movement of the folding unit.

The folding unit may reciprocate between a first point and a second point to fold the separator, and if a two-dimensional coordinate system is introduced to include a first axis passing through the first point and the second point and a second axis extending from the stack table in a direction perpendicular to the first axis, the control unit controls movement of the compensation unit to compensate for the change in control length in the two-dimensional coordinate system.

In the compensation, if the control length is changed into a smaller value than a predefined reference value, the control unit may compensate for a negative change in the control length by controlling the movement of the compensation unit to increase a tension of a portion of the separator corresponding to the control length, wherein the predefined reference value may be the control length if a target tension is formed in the separator.

In the compensation, if the control length is changed into a larger value than a predefined reference value, the control unit may compensate for a positive change in the control length by controlling the movement of the compensation unit to decrease a tension of a portion of the separator corresponding to the control length, wherein the predefined reference value may be the control length if a target tension is formed in the separator.

In the compensation, the control unit may control the movement of the compensation unit in real time according to the change in control length to actively compensate for the change in control length.

BRIEF DESCRIPTION

Features will become apparent to those of ordinary skill in the art by describing in detail exemplary embodiments with reference to the attached drawings, in which:

FIG. 1 illustrates a structure of an apparatus for manufacturing an electrode assembly according to one or more embodiments;
FIG. 2 is a graph showing an example of the occurrence of a tension deviation of a separator according to one or more embodiments;
FIG. 3 shows parameters used to compensate for a change in length of the separator according to one or more embodiments;
FIGS. 4 and 5 show examples of a process of compensating for a change in length of the separator according to one or more embodiments;
FIGS. 6 to 9 show examples in which a control length is calculated according to one or more embodiments; and
FIG. 10 is a flow diagram of a method of controlling an apparatus for manufacturing an electrode assembly according to one or more embodiments.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best description. Accordingly, embodiments disclosed in the present specification and configurations illustrated in the drawings are merely most exemplary embodiments of the present disclosure and do not represent all of the technical ideas of the present disclosure, and thus it should be understood that there may be various equivalents and modifications that can substitute these at the time of filing of the present application. Further, "comprise and include" and/or "comprising and including" used in this specification should be interpreted as specifying the presence of described shapes, numbers, steps, operations, members, elements, and/or groups thereof and do not exclude the presence or addition of other shapes, numbers, operations, members, elements, and/or groups thereof. Further, the use of "may" and "may be" when describing embodiments of the present disclosure refers to "one or more embodiments of the present disclosure."

In addition, for a better understanding of the present disclosure, the accompanying drawings are not illustrated on an actual scale and sizes of some elements can be exaggerated.

Stating that two objects of comparison are "the same" means that the two objects of comparison are "substantially the same." Therefore, substantially the same may include a deviation that is considered low in the art, for example, a deviation of 5% or less. In addition, uniformity of a parameter in a certain area may mean uniformity from an average perspective.

It will be understood that, although the terms first, second, and the like are used herein to describe various elements, these elements should not be limited by these terms. These terms are only used to distinguish one element from another element, and a first element may also be a second element unless particularly described otherwise.

Through the specification, each element may be singular or plural unless particularly described otherwise.

When it is said that an arbitrary element is disposed on "an upper portion (or a lower portion)" of an element or disposed "above (or below)" an element, this may not only mean that the arbitrary element is disposed in contact with an upper surface (or a lower surface) of the element, but also mean that another element may be interposed between the element and the arbitrary element disposed above (or below) the element.

Also, when it is said that a certain element is "connected" or "coupled" to another element, this may mean that the elements are directly connected or coupled to each other, but it should be understood that another element may be "interposed" between the elements or the elements may be "connected" or "coupled" to each other via another element. Further, the term "electrically coupled" may mean not only "directly coupled" but also may include "coupled via other interposing element."

Throughout the specification, "A and/or B" refers to "A, B, or A and B" unless particularly described otherwise. That is, "and/or" includes all or any combination of a plurality of listed items. "C to D" refers to C or more and D or less unless particularly described otherwise.

1. Structure of apparatus for manufacturing electrode assembly

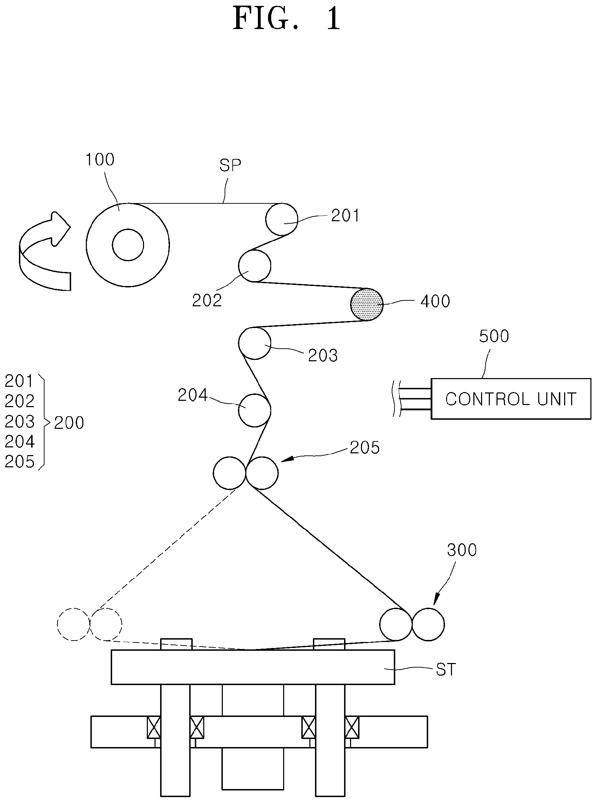

Referring to FIG. 1, an apparatus for manufacturing an electrode assembly (hereinafter referred to as manufacturing apparatus) of one or more embodiments includes a separator supply unit 100 (e.g., a supplier), a guide unit 200 (e.g., a guide), a folding unit (e.g., a folder) 300, a compensation unit 400 (e.g., a compensator), and a control unit 500 (e.g., a controller).

The separator supply unit 100 may be positioned at a front end of a movement path of a separator SP in a direction in which the separator SP is moved, thereby supplying the separator SP. The separator supply unit 100 may be implemented as an unwinder that unwinds the wound separator SP and supplies the separator SP to a first guide member 201 which will be described below. The separator supply unit 100 may be configured to rotate at a predefined rotation speed and operate to unwind the separator SP. Accordingly, a supply rate of the separator SP may be maintained at a constant rate corresponding to the rotation speed.

The guide unit 200 may be provided on the movement path of the separator SP from the separator supply unit 100 to the folding unit 300, which will be described below, to guide the movement of the separator SP. The guide unit 200 may be provided as a plurality of guide members provided on the movement path of the separator SP and may include first to $N^{th}$ guide members 201 to 205 (N is a natural number of 2 or more), and the first to $N^{th}$ guide members 201 to 205 may be sequentially disposed in the direction in which the separator SP is moved. As shown in FIG. 1, each of the guide members 201 to 205 may be implemented as a guide roller that guides the movement of the separator SP through a rotational motion. The first to $N^{th}$ guide members 201 to 205 may be fixedly installed on a frame constituting the apparatus for manufacturing an electrode assembly and provided to rotate at a constant speed. Since positions of the first to $N^{th}$ guide members 201 to 205 are fixed and a rotation speed thereof is maintained constant, the first to $N^{th}$ guide members 201 to 205 are configured to not affect a change in length of the movement path of the separator SP (that is, in an example embodiment, the change in length of the movement path of the separator SP may be caused only by the folding unit 300 which will be described below). The number of guide members (that is, a value of N) may have a specific value according to the type or specification of an electrode assembly to be manufactured (FIG. 1 illustrates an example in which five guide rollers are provided). Meanwhile, to help understanding of the present embodiment, the $N^{th}$ guide member 205, which is positioned and fixed at a tail end of the movement path of the separator SP (that is, at a front end of the folding unit 300) to guide the movement of the separator SP, will be referred to as "end guide member 205."

The folding unit 300 is configured to fold the separator SP on a stack table ST by reciprocating (e.g., moving) between a first point $P_1$ and a second point $P_2$ positioned symmetrically in a first axis direction (described below) with respect to the center of the stack table ST. That is, in the present embodiment, the position of the stack table ST may be fixed, and the folding unit 300 may fold the separator SP by reciprocating between the first point $P_1$ and the second point $P_2$ under the control of the control unit 500 which will be described below. The folding unit 300 may be implemented as a final roller that supplies the separator SP to the stack table ST, and may be provided as a pair of roller members as shown in FIG. 1. Accordingly, the pair of rollers constituting the folding unit 300 may rotate in opposite directions, the separator SP may be introduced between the pair of rollers, and the separator SP may be drawn from between the pair of rollers. The separator SP may be folded on the stack table ST by moving the folding unit 300 in the first axis direction (e.g., an x-axis direction) in a state in which the separator SP is introduced and drawn. A distance between a specific component and the folding unit 300, which will be described below, refers to a distance between the specific component and the center between the pair of rollers. In addition, the first point $P_1$ and the second point $P_2$ may each correspond to a point at which the center between the pair of rollers is positioned.

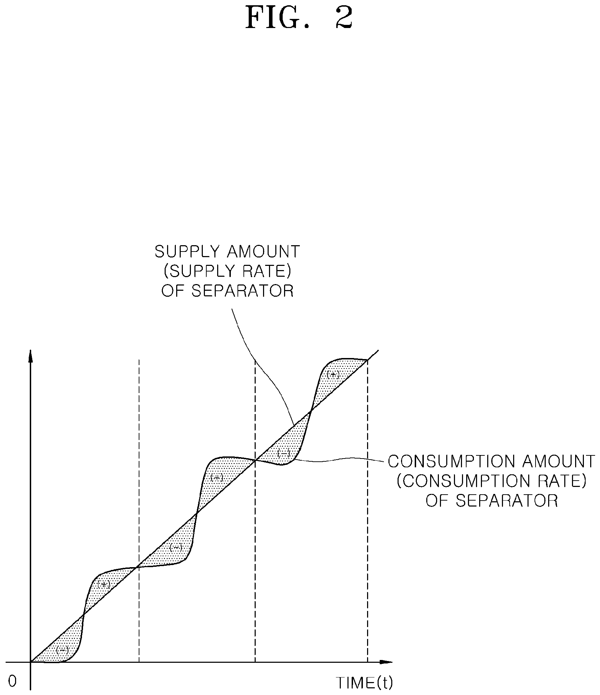

As described above, in a process of folding the separator SP, when a consumption rate of the separator SP does not keep up with a supply rate of the separator SP, a situation may occur in which a tension of the separator SP instantaneously converges to a value of 0 (see a section indicated by (-) in FIG. 2). In addition, when the supply rate of the separator SP does not keep up with the consumption rate of the separator SP, a situation may occur in which, as the tension of the separator SP increases, the stretched separator SP is stacked on a stack cell (see a section indicated by (+) in FIG. 2).

In order to cancel a tension deviation of the separator SP caused by a deviation between a supply amount and a consumption amount of the separator SP as described above, in one or more embodiments, the compensation unit 400 may be provided to be movable in the first axis direction (described below) to compensate for a change in length of the movement path of the separator SP. As shown in FIG. 1, the compensation unit 400 may be implemented as a dancer roller and may also be referred to as an active dancer because the compensation unit 400 is provided to be movable in the first axis direction. An actuator (not shown) including a motor, a gear member, and the like may be provided to move the dancer roller in the first axis direction, and the movement of the dancer roller may be controlled by the control unit 500.

The control unit 500 may be a device that controls the movement of the folding unit 300 and the compensation unit 400, may be implemented as a central processing unit (CPU), a system-on-chip (SoC), or a processor, may control a plurality of hardware or software components connected to the control unit 500 by running an operating system or application, and may perform various data processing and calculations. The control unit 500 may be configured to execute at least one instruction stored in a memory and store execution result data in the memory.

2. Definitions of Terms and Parameters

To assist in the understanding of one or more embodiments herein, terms are first defined. The length of the movement path of the separator is a length from a point at which the separator is drawn from the separator supply unit 100 to a point at which the separator reaches the stack table ST.

As described above, the change in length of the movement path of the separator is caused only by the movement of the folding unit 300. Among the entire movement path of the separator, a portion of which a length is changed due to the movement of the folding unit 300 corresponds to a path connected to the end guide member 205, the folding unit 300, and the stack table ST. Accordingly, a length of the separator on the movement path of the separator connected to the end guide member 205, the folding unit 300, and the stack table ST is defined as a "control length" in one or more embodiments. In other words, the change in length of the movement path of the separator is a change in control length based on the movement of the folding unit 300. Accordingly, the control unit 500 operates to control the movement of the compensation unit 400 and compensate for the change in control length.

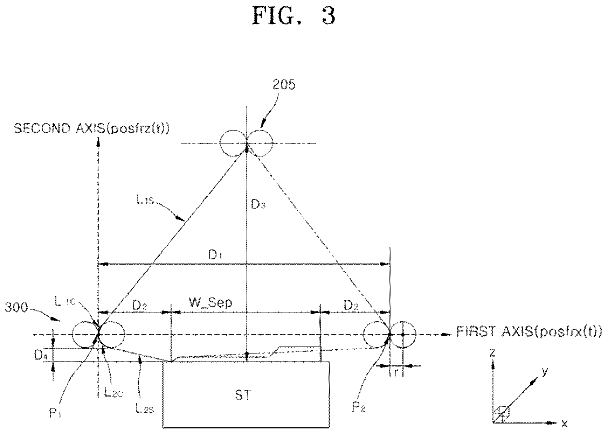

In order to provide a quantitative mechanism for compensating for the change in control length, in one or more embodiments, a two-dimensional coordinate system may be introduced. Referring to FIG. 3, a first axis (for example, an x-axis) constituting the two-dimensional coordinate system corresponds to an axis passing through a first point $P_1$ and a second point $P_2$ which are both end points constituting a movement path of the folding unit 300. A second axis (for example, a z-axis) constituting the two-dimensional coordinate system corresponds to an axis extending from the stack table ST in a direction perpendicular to the first axis. Accordingly, the control unit 500 operates to control the movement of the compensation unit 400 and compensate for the change in control length in the two-dimensional coordinate system.

The control unit 500 may control the movement of the compensation unit 400 based on structural parameters for a structure of the manufacturing apparatus and motion parameters for the motion of the folding unit 300 to compensate for the change in length of the movement path of the separator (for example, a change in control length).

FIG. 3 shows a movement path of the separator from the end guide member 205 to the stack table ST. Referring to FIG. 3, the structural parameters may include (i) a first distance $D_1$ between the first point $P_1$ and the second point $P_2$, (ii) a second distance $D_2$ between an edge of the separator and the folding unit 300 (the center of the pair of rollers) formed in a width (W_Sep) direction of the separator in a state in which the folding unit 300 is positioned at the first point $P_1$ or the second point $P_2$, (iii) a third distance $D_3$ from the stack table ST to the end guide member 205 (the center between the pair of rollers constituting the end guide member 205), (iv) a fourth distance $D_4$ from the stack table ST to a lower end of the folding unit 300, and (v) a radius r of each of the two rollers constituting the folding unit 300. In addition, the motion parameters may include a first axis direction movement distance posfrx(t) (e.g., along an x-axis) of the folding unit 300, and in one or more embodiments in which the folding unit 300 is provided to be movable in a second axis direction, the motion parameter may further include a second axis direction movement distance posfrz(t) (e.g., along a z-axis). The structural parameters may be input in advance by a user through an input interface. The motion parameters (the first axis direction movement distance and the second axis direction movement distance of the folding unit 300) may be calculated by respectively multiplying a movement speed in the first axis direction and a movement speed in the second axis direction, which may be input in advance by a user through an input interface, by an elapsed time (that is, a movement time of the folding unit 300).

The symbols and descriptions of the structural parameters and the motion parameters are summarized in Table 1 below.

Table 1

| Parameter | Symbol | Description |
|---|---|---|
| First distance | $D_1$ | Distance between first point and second point |
| Second distance | $D_2$ | Distance between edge of separator and folding unit formed in width direction of separator in a state in which folding unit positioned at first or second point. |
| Third distance | $D_3$ | Distance from stack table to end guide member |
| Fourth distance | $D_4$ | Distance from stack table to lower end of folding unit |
| Radius | r | Radius of folding unit |
| First axis direction movement distance | posfrx(t) | First axis direction movement distance of folding unit up to time t |
| Second axis direction movement distance | posfrz(t) | Second axis direction movement distance of folding unit up to time t |

In addition, referring to FIG. 3, the above-described control length may include two straight lengths and two arc lengths. For example, the control length may be defined as the sum of (i) a first straight length $L_{1S}$ of the separator extending from the end guide member 205 to a first contact point between the separator and the folding unit 300, (ii) a first arc length $L_{1C}$ of the separator extending from the first contact point to an intersection between the folding unit 300 and the first axis, iii) a second arc length $L_{2C}$ of the separator extending from the intersection to a second contact point between the separator and the folding unit 300, and (iv) a second straight length $L_{2S}$ of the separator extending from the second contact point to the stack table ST. That is, a control length L may be quantitatively expressed as "$L_{1S}+L_{1C}+L_{2S}+L_{2C}$."

3. Compensation for change in control length

3-1. Method of compensating for change in control length in control unit

In the present embodiment, the control unit 500 operates to compensate for a change in control length by differentially controlling the movement of the compensation unit 400 according to a comparison result between the control length and a predefined reference value. The above-described predefined reference value may be a control length when a target tension (for example, a target tension of the separator defined in a design specification for manufacturing an electrode assembly) is formed in the separator and may be predefined in the control unit 500. That is, when the control length has a length corresponding to the reference value, a compensation for the control length may not be required, and when the control length has a smaller or larger value than the reference value, a compensation for the change in control length may be performed to remove a tension deviation formed in the separator.

For example, when the control length is changed into a smaller value than the predefined reference value, the control unit 500 controls the movement of the compensation unit 400 by increasing the tension of a portion of the separator corresponding to the control length, thereby compensating for a negative change in control length.

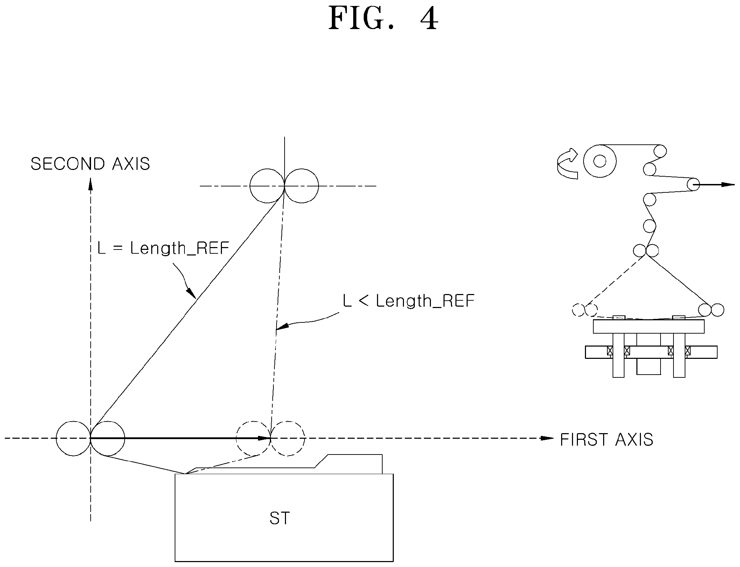

FIG. 4 shows an example in which a target tension that is formed in the separator corresponds to a case in which the folding unit 300 is positioned at a first point $P_1$. Since a control length L in the state of FIG. 4 is the same as a reference value Length_REF, a compensation for a change in control length is not required.

In the state of FIG. 4, when the folding unit 300 moves to the right in the first axis direction to fold the separator, the control length decreases to have a smaller value than the reference value, and thus a tension formed in the separator at a portion corresponding to the control length decreases. In order to compensate for a decrease in tension due to a negative change in control length, the control unit 500 may control the movement of the compensation unit 400 to increase the tension of the portion of the separator corresponding to the control length. For example, in a case in which the compensation unit 400 is provided at a right side of the manufacturing apparatus as shown in FIG. 1, the control unit 500 may move the compensation unit 400 to the right to increase the tension of the portion of the separator corresponding to the control length.

In addition, when the control length is changed into a larger value than the reference value, the control unit 500 controls the movement of the compensation unit 400 by decreasing the tension of the portion of the separator corresponding to the control length, thereby compensating for a positive change in control length.

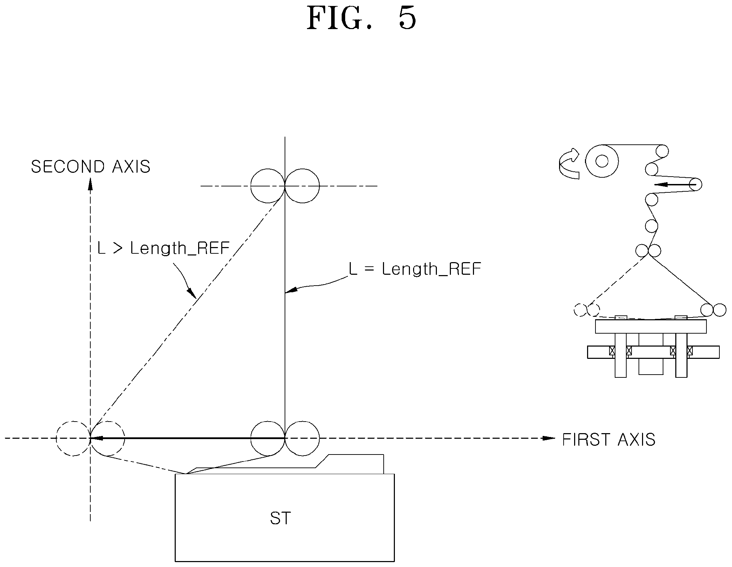

FIG. 5 shows an example in which a target tension that is formed in the separator corresponds to a case in which the folding unit 300 is positioned at a midpoint between a first point $P_1$ and a second point $P_2$. Since a control length L in the state of FIG. 5 is the same as a reference value Length_REF, a compensation for a change in control length is not required.

In the state of FIG. 5, if the folding unit 300 moves to the left (or the right) in the first axis direction to fold the separator, the control length increases to have a larger value than the reference value, and thus a tension formed in the separator at a portion corresponding to the control length increases. In order to compensate for an increase in tension due to a positive change in control length, the control unit 500 may control the movement of the compensation unit 400 to decrease the tension of the portion of the separator corresponding to the control length. For example, in a case in which the compensation unit 400 is provided at a right side of the manufacturing apparatus as shown in FIG. 1, the control unit 500 may move the compensation unit 400 to the left to decrease the tension of the portion of the separator corresponding to the control length.

The control unit 500 may control the movement of the compensation unit 400 in real time according to the change in control length to actively compensate for the change in control length. The control unit 500 may obtain a movement amount of the compensation unit 400 from an amount of change in control length with respect to the reference value to control the movement of the compensation unit 400 according to the obtained movement amount. The movement amount of the compensation unit may be obtained based on a lookup table or function that defines a relationship between the change in control length with respect to the reference value and the movement amount of the compensation unit, and the lookup table or function may be predefined in the control unit 500 based on a designer's experimental result or the like.

3-2. Quantitative control method of compensating for change in control length

As described above, a negative or positive change in control length may be compensated for by moving the compensation unit 400 in the first axis direction. The control length may be calculated based on structural parameters of the manufacturing apparatus and motion parameters of the folding unit 300. In the present embodiment, since the control length functions as a factor that controls the movement of the compensation unit 400, the structural parameters of the manufacturing apparatus and the motion parameters of the folding unit 300, which are considered when the control length is calculated, may also function as factors that control the movement of the compensation unit 400.

The control length may be defined as the sum of a first straight length, a first arc length, a second straight length, and a second arc length, and the control unit 500 may calculate the first straight length, the first arc length, the second straight length, and the second arc length based on the structural parameters and the motion parameters. Factors of mathematical equations expressed below are as shown in Table 1 above.

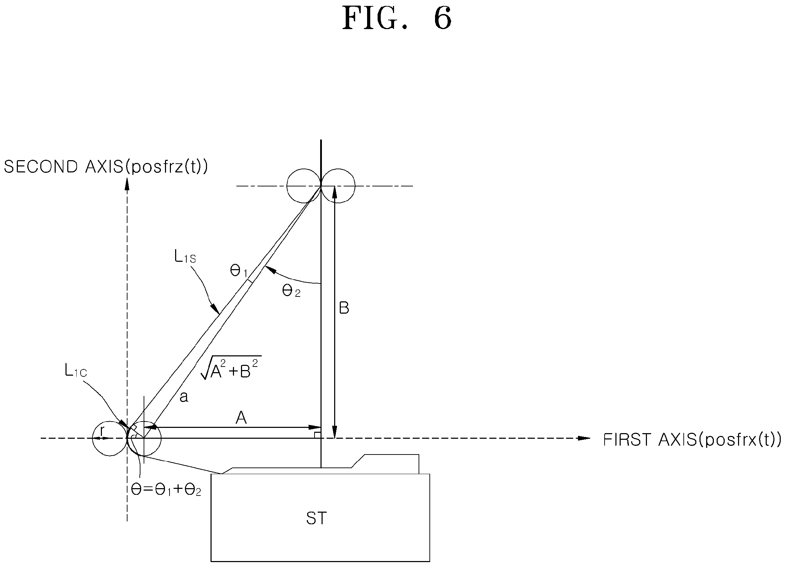

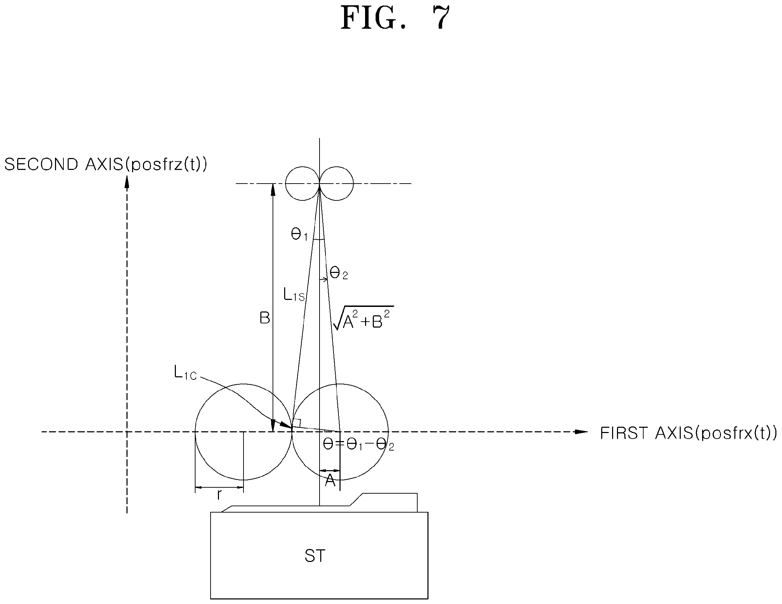

FIGS. 6 and 7 are exemplary diagrams for describing a process of calculating the first straight length and the first arc length according to a position of the folding unit 300.

First, referring to FIG. 6, Equations 1 and 2 are defined as follows.

[Equation 1]

$$A = abs(\frac{D_1}{2} - posfrx(t)) - r$$

$$B = D_3 - D_4 - r - posfrz(t)$$

[Equation 2]

$$\theta = \theta_1 + \theta_2$$

$$\theta_1 = \arcsin(\frac{r}{\sqrt{A^2 + B^2}})$$

$$\theta_2 = \arctan(\frac{A}{B})$$

According to Equations 1 and 2 and the modeling of FIG. 6, the first straight length and the first arc length are expressed according to Equation 3 below.

[Equation 3]

$$L_{1S} = \sqrt{A^2 + B^2} \times \cos(\theta_1)$$

$$L_{1C} = r \times (\theta_1 + \theta_2)$$

Equation 3 is valid when an application condition satisfies "|A|≥r."

FIG. 7 shows a case in which the application condition changes from "|A|≥r" to "|A|<r" as the folding unit 300 moves toward the center of the stack table ST (to help clear understanding of the embodiment, the rollers of the folding unit 300 are enlarged and shown).

Referring to FIG. 7, Equations 4 and 5 are defined as follows.

[Equation 4]

$$A = abs(\frac{D_1}{2} - posfrx(t)) - r$$

$$B = D_3 - D_4 - r - posfrz(t)$$

[Equation 5]

$$\theta = \theta_1 - \theta_2$$
$$\theta_1 = \arcsin\left(\frac{r}{\sqrt{A^2 + B^2}}\right)$$
$$\theta_2 = \arctan\left(\frac{A}{B}\right)$$

According to Equations 4 and 5 and the modeling of FIG. 7, the first straight length and the first arc length are expressed according to Equation 6 below.

[Equation 6]

$$L_{1S} = \sqrt{A^2 + B^2} \times \cos(\theta_1)$$
$$L_{1C} = r \times (\theta_1 - \theta_2)$$

FIGS. 6 and 7 show an example in which the folding unit 300 is initially positioned at a left side with respect to the center of the stack table ST. However, Equations 1 to 6 are equally applied even when the folding unit 300 is positioned at a right side with respect to the center of the stack table ST.

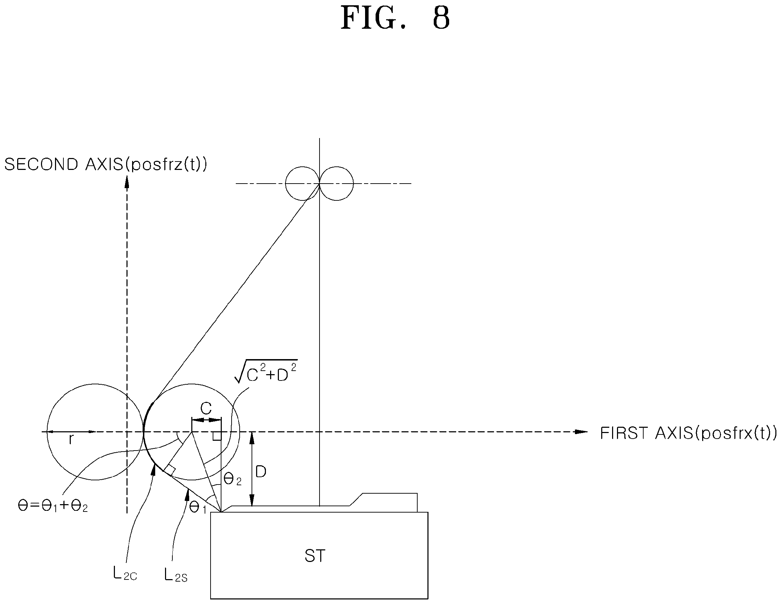

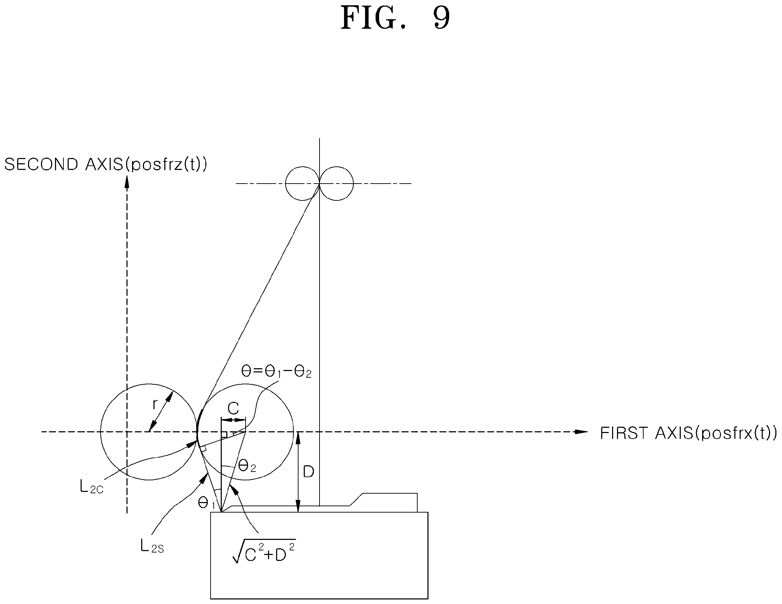

FIGS. 8 and 9 are exemplary diagrams for describing a process of calculating the second straight length and the second arc length according to a position of the folding unit 300.

Referring to FIG. 8 (to assist in understanding, the rollers of the folding unit 300 are enlarged as shown), Equations 7 and 8 are defined as follows.

[Equation 7]

$$C = abs(D_2 - posfrx(t)) - r$$
$$D = D_4 + r + posfrz(t)$$

[Equation 8]

$$\theta = \theta_1 + \theta_2$$
$$\theta_1 = \arcsin\left(\frac{r}{\sqrt{C^2 + D^2}}\right)$$
$$\theta_2 = \arctan\left(\frac{C}{D}\right)$$

According to Equations 7 and 8 and the modeling of FIG. 8, the second straight length and the second arc length are expressed according to Equation 9 below.

[Equation 9]

$$L_{2S} = \sqrt{C^2 + D^2} \times \cos(\theta_1)$$
$$L_{2C} = r \times (\theta_1 + \theta_2)$$

Equation 9 is valid when an application condition satisfies "r+posfrx(t) ≤ D2" (see FIG. 3 for D2).

FIG. 9 shows a case in which the application condition is changed from "r+posfrx(t) ≤ D2" to "r+posfrx(t) > D2" as the folding unit 300 moves toward the center of the stack table ST (to assist in understanding, the rollers of the folding unit 300 are enlarged as shown).

Referring to FIG. 9, Equations 10 and 11 are defined as follows.

[Equation 10]

$$C = abs(D_2 - posfrx(t)) - r$$
$$B = D_4 + r + posfrz(t)$$

[Equation 11]

$$\theta = \theta_1 - \theta_2$$
$$\theta_1 = \arcsin(\frac{r}{\sqrt{C^2 + D^2}})$$
$$\theta_2 = \arctan(\frac{C}{D})$$

According to Equations 10 and 11 and the modeling of FIG. 9, the second straight length and the second arc length are expressed according to Equation 12 below.

[Equation 12]

$$L_{2S} = \sqrt{C^2 + D^2} \times \cos(\theta_1)$$
$$L_{2C} = r \times (\theta_1 - \theta_2)$$

Equations 1 to 12 are classified and summarized according to the above-described application conditions as shown in Table 2 below.

Table 2

| Application conditions | Used equations |
|---|---|
| "\|A\| ≥ r" & "r+posfrx(t) ≤ $D_2$" | Equations 3 and 9 |
| "\|A\| ≥ r" & "r+posfrx(t) > $D_2$" | Equations 3 and 12 |
| "\|A\| < r" & "r+posfrx(t) ≤ $D_2$" | Equations 6 and 9 |
| "\|A\| < r" & "r+posfrx(t) > $D_2$" | Equations 6 and 12 |

As the first straight length, the first arc length, the second straight length, and the second arc length are calculated through such a process, if the control length is calculated as the sum of those values, the control unit 500 may obtain the movement amount of the compensation unit 400 from an amount of change in control length with respect to the reference value and may control the movement of the compensation unit 400 according to the obtained movement amount. Accordingly, a change in length of a movement path of the separator is actively compensated for in real time to remove a tension deviation of the separator caused by a change in length of the separator, thereby securing the consistent physical properties of the separator and improving the quality of an electrode assembly.

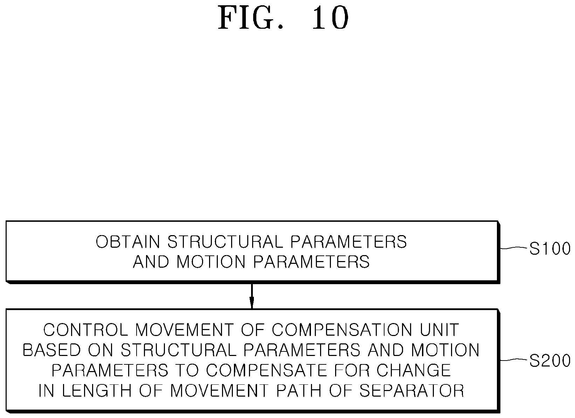

FIG. 10 is a flowchart for a method of controlling an apparatus for manufacturing an electrode assembly according to one or more embodiments. The method of controlling an apparatus for manufacturing an electrode assembly according to the present embodiment will be described with reference to FIG. 10. The detailed descriptions of contents that overlap the above-described contents will be omitted, and the description will focus on the time-series configuration.

Initially, the control unit 500 acquires structural parameters for a structure of the manufacturing apparatus and motion parameters for a motion of the folding unit 300 (S100). The structural parameters and the motion parameters may be obtained through a user input on an interface device.

Next, the control unit 500 controls the movement of the compensation unit 400 based on the structural parameters and motion parameters obtained in operation S100 to compensate for a change in length of a movement path of the separator (S200).

When a length of the separator on the movement path of the separator connected to the end guide member 205, the folding unit 300, and the stack table ST is defined as a control length, the change in length of the movement path of the separator may be expressed as a change in control length based on the movement of the folding unit 300. Accordingly, in operation S200, the control unit 500 controls the movement of the compensation unit 400 to compensate for the change in control length in a two-dimensional coordinate system.

In operation S200, when the control length is changed into a smaller value than a predefined reference value, the movement of the compensation unit 400 is controlled by increasing a tension of a portion of the separator corresponding to the control length, thereby compensating for a negative change in control length. In this case, the above-described reference value may be predefined as a value of the control length when a target tension is formed in the separator. In addition, in operation S200, when the control length is changed into a larger value than the reference value, the control unit 500 controls the movement of the compensation unit 400 by decreasing the tension of the portion of the separator corresponding to the control length, thereby compensating for a positive change in control length. The control unit 500 may control the movement of the compensation unit 400 in real time according to the change in control length to actively compensate for the change in control length.

In order to control the movement of the compensation unit 400 in operation S200, the control unit 500 may calculate a first straight length, a first arc length, a second straight length, and a second arc length based on parameters of Table 1 above and application conditions of Table 2 above. Then, the control unit 500 may calculate the control length as the sum of the first straight length, the first arc length, the second straight length, and the second arc length, obtain a movement amount of the compensation unit 400 from an amount of change in control length with respect to the reference value, and then control the movement of the compensation unit 400 according to the obtained movement amount.

An electrode assembly constituting a secondary battery generally has a stack structure in which a separator is disposed between a positive electrode and a negative electrode and is manufactured through a process of folding separators in a zigzag manner and alternately arranging cut positive electrodes and cut negative electrodes therebetween. In order to form an electrode assembly into a zigzag stack structure, i) a process of folding a separator while laterally moving a stack table on which electrode plates are stacked and stacking the electrode plates at a position at which the stack table is stationary laterally, or ii) a process of folding a separator through a method in which rollers transfer the separator to the left or right of a stack table, and stacking electrode plates on the stack table that is stationary at the center.

In both of such cases, in a process of folding and stacking a separator, when a consumption amount of a separator (that is, an amount of folded and stacked separator) is smaller than a supply amount of the separator (that is, a consumption rate of the separator does not keep up with a supply rate of the separator), a situation may occur in which a tension of the separator instantaneously converges to a value of 0. In addition, when a consumption amount of a separator is larger than a supply amount of the separator (that is, a supply rate of the separator does not keep up with a consumption rate of the separator), a case may also occur in which, as a tension of the separator increases, the stretched separator is stacked on a stack cell.

In order to remove such a tension deviation of a separator, a method of manufacturing an electrode assembly by moving a stack table in a U-shape has been proposed. However, it is not easy to move the heavy stack table, and the movement of the heavy stack table requires a long time. Thus, there is a disadvantage in terms of time required to manufacture an electrode assembly.

As used herein, the term "unit" may include a unit implemented in hardware, software, or firmware, and may be used interchangeably with another term, for example, logic, logic block, part, or circuit. The unit may be a single integral component, or a minimum unit or part thereof, adapted to perform one or more functions. For example, according to one embodiment, the "unit" may be implemented in the form of an application-specific integrated circuit (ASIC). In addition, implementations described herein may be implemented in, for example, a method or process, an apparatus, a software program, a data stream, or a signal. Although discussed only in the context of a single form of implementation (e.g., discussed only as a method), implementations of the discussed features may also be implemented in other forms (for example, an apparatus or a program). The apparatus may be implemented in suitable hardware, software, firmware, and the like. A method may be implemented in an apparatus such as a processor, which is generally a computer, a microprocessor, an integrated circuit, a processing device including a programmable logic device, or the like. Processors also include communication devices such as a computer, a cell phone, a portable/personal digital assistant ("PDA"), and other devices that facilitate communication of information between end-users.

According to the present disclosure, by controlling the movement of a compensation unit (active dancer) based on structural parameters for a structure of an apparatus for manufacturing an electrode assembly and motion parameters for a motion of a folding unit (final roller) folding a separator, a change in length of a movement path of the separator is actively compensated for to remove a tension deviation of the separator caused by a change in length of the separator, thereby securing the consistent physical properties of the separator and improving the quality of an electrode assembly.

The present disclosure provides an apparatus for manufacturing an electrode assembly which is capable of improving the quality of an electrode assembly by removing a tension deviation of a separator caused by a change in length of the separator in an operation of folding the separator during a manufacturing process of the electrode assembly, and a method of controlling the same.

However, the technical objects to be solved by the present disclosure are not limited to the above, and other objects that are not described herein will be clearly understood by those skilled in the art from the following disclosure.

An apparatus for manufacturing an electrode assembly and a method of controlling the same adopt a configuration which actively compensates for a change in length of a movement path of a separator in real time by controlling the movement of a compensation unit (active dancer) based on structural parameters for a structure of the apparatus for manufacturing an electrode assembly and motion parameters for a motion of a folding unit (final roller) folding the separator.

However, the effects that can be achieved through the present disclosure are not limited to the above-described effects, and other technical effects not described herein will be clearly understood by those skilled in the art from the following disclosure.

Although the present disclosure has been described with limited embodiments and drawings, the present disclosure is not limited to thereto, and instead, it would be appreciated by those skilled in the art that various modifications and changes may be made to these embodiments without departing from the scope of the present disclosure, which is defined by the claims and their equivalents.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**Claims**

1. An apparatus for manufacturing an electrode assembly formed in a stack structure of an electrode plate and a separator (SP), the apparatus comprising:

   a separator supply unit (100) configured to supply the separator (SP);
   a stack table (ST);
   a movable folding unit (300) configured to move with respect to the stack table and configured to fold the separator on the stack table;
   a guide unit (200) provided on a movement path of the separator from the separator supplier to the folding unit (300) to guide movement of the separator;
   a movable compensator unit (400) configured to compensate for a change in length of the movement path of the separator(SP); and
   a control unit (500) configured to control movement of the compensator unit (400) based on structural parameters for a structure of the apparatus and motion parameters for a motion of the folding unit (300) to compensate for the change in length of the movement path of the separator.

2. The apparatus as claimed in claim 1, wherein the guide unit (200) includes an end guide member (205) positioned and fixed at a front end of the folding unit (300) with respect to the movement path of the separator (SP) to guide movement of the separator (SP) toward the folding unit (300).

3. The apparatus as claimed in one of claims 1 or 2, wherein, if a length of the separator on the movement path of the separator connected to the end guide member (205), the folding unit (300), and the stack table (ST) is defined as a control length, the change in length of the movement path of the separator is a change in the control length according to movement of the folding unit (300).

4. The apparatus as claimed in claim 3, wherein the folding unit (300) is configured to reciprocate between a first point and a second point to fold the separator, and
if a two-dimensional coordinate system is introduced to include a first axis passing through the first point and the second point and a second axis extending from the stack table (ST) in a direction perpendicular to the first axis, the controller unit (500) is configured to control the movement of the compensator unit (400) to compensate for the change in control length in the two-dimensional coordinate system.

5. The apparatus as claimed in claim 4, wherein the compensator unit (400) is provided on the movement path of the separator and is configured to move in a direction of the first axis and compensate for the change in control length.

6. The apparatus as claimed in claim 5, wherein, if the control length is changed into a smaller value than a predefined reference value, the controller unit (500) is configured to compensate for a negative change in the control length by controlling the movement of the compensator unit (400) to increase a tension of a portion of the separator corresponding to the control length, wherein the predefined reference value is the control length when a target tension is formed in the separator.

7. The apparatus as claimed in claim 5, wherein, in the compensation, if the control length is changed into a larger value than a predefined reference value, the controller unit (500) is configured to compensate for a positive change in the control length by controlling the movement of the compensator unit (400) to decrease a tension of a portion of the separator corresponding to the control length, wherein the predefined reference value is the control length when a target tension is formed in the separator.

8. The apparatus as claimed in one of claims 5 to 7, wherein, in the compensation, the controller unit (500) is configured to control the movement of the compensator unit (400) in real time according to the change in control length to actively compensate for the change in control length.

9. The apparatus as claimed in at least one of claims 4 to 8, wherein the structural parameters include (i) a first distance between the first point and the second point, (ii) a second distance between an edge of the separator and the folding unit (300) formed with respect to a width direction of the separator in a state in which the folding unit (300) is positioned at the first point or the second point, (iii) a third distance from the stack table (ST) to the end guide member (205), (iv) a fourth distance from the stack table (ST) to a lower end of the folding unit (300), and (v) a radius of the folding unit (300) implemented as a roller type, and
wherein the motion parameters include a first axis direction movement distance of the folding unit (300).

10. The apparatus as claimed in claim 9, wherein the control length includes (i) a first straight length of the separator extending from the end guide member (205) to a first contact point between the separator and the folding unit (300), (ii) a first arc length of the separator extending from the first contact point to an intersection between the folding unit (300) and the first axis, iii) a second arc length of the separator extending from the intersection to a second contact point between the separator and the folding unit (300), and (iv) a second straight length of the separator extending from the second contact point to the stack table (ST).

11. The apparatus as claimed in claim 10, wherein the controller unit (500) is configured to calculate the first straight length and the first arc length using the first distance, the third distance, the fourth distance, the radius of the folding unit (300), and the first axis direction movement distance of the folding unit (300).

12. The apparatus as claimed in claim 10, wherein the controller unit (500) is configured to calculate the second straight length and the second arc length using the second distance, the fourth distance, the radius of the folding unit (300), and the first axis direction movement distance of the folding unit (300).

13. A method of controlling an apparatus for manufacturing an electrode assembly formed in a stack structure of an electrode plate and a separator, the method comprising:

obtaining, by a controller unit (500), structural parameters for a structure of the apparatus and motion parameters for a motion of a folding unit (300); and

controlling, by the controller unit (500), movement of a compensator unit (400) based on the obtained structural parameters and motion parameters to compensate for a change in length of a movement path of the separator, wherein the apparatus includes a separator supply unit (100) configured to supply the separator, the folding unit (300) that moves with respect to a stack table (ST) to fold the separator on the stack table (ST), and a guide unit (200) provided on the movement path of the separator from the separator supply unit (100) to the folding unit (300) to guide movement of the separator.

14. The method as claimed in claim 13, wherein the guide unit (200) includes an end guide member (205) positioned and fixed at a front end of the folding unit (300) with respect to the movement path of the separator to guide the movement of the separator toward the folding unit (300), and

if a length of the separator on the movement path of the separator connected to the end guide member (205), the folding unit (300), and the stack table (ST) is defined as a control length, a change in length of the movement path of the separator is a change in the control length according to movement of the folding unit (300).

15. The method as claimed in one of claims 13 or 14, wherein the folding unit (300) reciprocates between a first point and a second point to fold the separator, and

if a two-dimensional coordinate system is introduced to include a first axis passing through the first point and the second point and a second axis extending from the stack table (ST) in a direction perpendicular to the first axis, the controller unit (500) controls movement of the compensator unit (400) to compensate for the change in control length in the two-dimensional coordinate system.

# FIG. 1

# FIG. 2

SUPPLY AMOUNT
(SUPPLY RATE)
OF SEPARATOR

CONSUMPTION AMOUNT
(CONSUMPTION RATE)
OF SEPARATOR

TIME(t)

0

FIG. 3

# FIG. 4

SECOND AXIS

L = Length_REF

L < Length_REF

FIRST AXIS

ST

FIG. 5

# FIG. 6

SECOND AXIS(posfrz(t))

$L_{1S}$

$\theta_1$

$\theta_2$

B

$\sqrt{A^2+B^2}$

$L_{1C}$

a

r

A

$\theta=\theta_1+\theta_2$

FIRST AXIS(posfrx(t))

ST

FIG. 7

FIG. 8

# FIG. 9

SECOND AXIS(posfrz(t))

$\Theta = \Theta_1 - \Theta_2$

FIRST AXIS(posfrx(t))

$\sqrt{C^2 + D^2}$

EP 4 574 724 A1

# FIG. 10

OBTAIN STRUCTURAL PARAMETERS
AND MOTION PARAMETERS — S100

CONTROL MOVEMENT OF COMPENSATION UNIT
BASED ON STRUCTURAL PARAMETERS AND MOTION
PARAMETERS TO COMPENSATE FOR CHANGE
IN LENGTH OF MOVEMENT PATH OF SEPARATOR — S200

Europäisches
Patentamt

European
Patent Office

Office européen
des brevets

## EUROPEAN SEARCH REPORT

Application Number

EP 24 21 4448

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 11 2020 001920 T5 (HITACHI POWER SOLUTIONS CO LTD [JP]) 30 December 2021 (2021-12-30) | 1,2,13 | INV. B65H20/34 B65H23/04 |
| A | * abstract * * figures 1,4a,4b * * paragraph [0009] * * claim 1 * * the whole document * ----- | 3-12,14, 15 | B65H23/188 B65H45/103 B65H45/20 H01M10/04 |
| A | KR 2023 0160156 A (LG ELECTRONICS INC [KR]) 23 November 2023 (2023-11-23) * abstract * * figure 1 * * paragraphs [0051] - [0059] * * the whole document * ----- | 1-15 | |

TECHNICAL FIELDS
SEARCHED       (IPC)

B65H
H01M

The present search report has been drawn up for all claims

| Place of search | Date of completion of the search | Examiner |
|---|---|---|
| The Hague | 5 May 2025 | Piekarski, Adam |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 24 21 4448

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | Publication date | Patent family member(s) | | Publication date |
|---|---|---|---|---|
| DE 112020001920 T5 | 30-12-2021 | CN | 113811500 A | 17-12-2021 |
| | | DE | 112020001920 T5 | 30-12-2021 |
| | | JP | 6619902 B1 | 11-12-2019 |
| | | JP | 2020189737 A | 26-11-2020 |
| | | WO | 2020235259 A1 | 26-11-2020 |
| KR 20230160156 A | 23-11-2023 | NONE | | |

EPO FORM P0459

For more details about this annex : see Official Journal of the European Patent Office, No. 12/82